# DEMANDE DE BREVET EUROPEEN

(11) **EP 1 118 750 A1**
(43) Date de publication de la demande: **25.07.2001**
(21) Numéro de dépôt: 01400105.1
(22) Date de dépôt: 15.01.2001
(51) Int. Cl.: F01N 3/28

(54) **Dispositif d'évacuation et de traitement des gaz d'échappement d'un moteur à combustion interne**

(30) Priorité: 20.01.2000 FR 0000705
(71) Demandeur: Peugeot Citroen Automobiles SA, 92200 Neuilly sur Seine (FR)
(72) Inventeur: Mille, Didier, 78600 Le Mesnil Le Roi (FR); Bortolussi, Gérard, 95110 Sannois (FR)
(74) Mandataire: Lanceplaine, Jean-Claude

(57) **Abrégé**

L'invention a pour objet un dispositif d'évacuation et de traitement des gaz d'échappement d'un moteur à combustion interne, du type comprenant une ligne principale d'échappement (10) reliée par l'une de ses extrémités à la sortie des cylindres (1, 2, 3, 4) du moteur par des tubulures d'échappement (21, 22, 23, 24) et comportant un pot catalytique (11) et au moins un pot de détente (12). L'entrée (11a) du pot catalytique est raccordée directement aux tubulures d'échappement et la ligne d'échappement comporte des moyens de séparation des gaz d'échappement en deux flux indépendants de la sortie des tubulures d'échappement jusqu'à l'entrée du pot de détente.

Le dispositif selon l'invention permet d'améliorer les performances du moteur à combustion interne.

## Description

La présente invention a pour objet un dispositif d'évacuation et de traitement des gaz d'échappement d'un moteur à combustion interne.

Les gaz d'échappement des moteurs à combustion interne contiennent différents polluants dont il est nécessaire de limiter au maximum les rejets dans l'atmosphère. Ces polluants sont constitués principalement par du monoxyde de carbone CO et des hydrocarbures imbrûlés HC et des oxydes d'azote NOₓ.

La réglementation concernant les normes de pollution des véhicules automobiles a tendance à devenir de plus en plus sévère de sorte que les limites supérieures fixées de rejet des différents polluants ont tendance à devenir de plus en plus basses dans les nouvelles réglementations.

Pour satisfaire à ces réglementations, il est connu d'intercaler sur la ligne d'échappement entre les tubulures d'échappement du moteur et le pot de détente, un pot catalytique qui est le plus souvent constitué par une enveloppe métallique contenant une structure imprégnée d'un matériau catalyseur présentant une très grande surface de contact pour les gaz d'échappement traversant le pot catalytique.

Les gaz polluants tels que les gaz mentionnés ci-dessus sont éliminés par une réaction chimique d'oxydation ou de réduction, au contact du catalyseur, dès que celui-ci a été porté par les gaz d'échappement à une température suffisante pour assurer le démarrage de la réaction chimique.

En effet, un catalyseur agit avec une efficacité proche de 100% au-delà d'une certaine température, dite température d'amorçage, de l'ordre de 350°C.

En de ça de cette température, son efficacité de conversion catalytique est quasiment nulle.

Ainsi, lorsque l'on mesure les émissions de polluants d'un véhicule automobile, on constate qu'environ 80% des émissions des polluants sont émis lors de la phase non amorcée du catalyseur, qui est d'autant plus longue que le pot catalytique est éloigné du moteur.

Il est également connu pour améliorer le rendement des pots catalytiques d'utiliser des techniques d'injection d'air à l'échappement. Mais ces techniques sont relativement coûteuses.

Une autre solution consiste à disposer le pot catalytique le plus près possible du collecteur de sortie des gaz d'échappement du moteur, ce qui permet d'éviter les dispositifs d'injection d'air à l'échappement et de réduire dans tous les cas la quantité de métaux précieux présents dans l'imprégnation des céramiques du pot catalytique, tout en réduisant le temps d'amorçage du catalyseur après un démarrage du moteur à froid.

Mais, pour obtenir des bonnes performances du moteur, les constructeurs doivent également prendre en compte les phénomènes d'ondes de surpression également appelés "bouffées d'échappement".

En effet, pendant la phase de croisement des soupapes du moteur, les soupapes d'admission et d'échappement sont simultanément ouvertes et ce sont à la fois des conditions de pression à l'admission et à l'échappement qui régissent le remplissage des cylindres donc des performances du moteur.

Lorsqu'un cylindre débute sa phase d'échappement, les gaz brûlés commencent à s'échapper du cylindre avant le point mort bas et génèrent ladite onde de surpression qui se propage dans la tubulure associée au cylindre considéré.

Cette onde de surpression se propage également dans le collecteur.

Les trajets parcourus par cette onde de surpression sont multiples, mais il existe en particulier un trajet qui est réalisé, du cylindre qui est en phase d'échappement vers le cylindre qui le précède dans l'ordre d'allumage.

Par exemple, dans le cas où l'onde de surpression provient du cylindre i + 1 qui suit le cylindre i dans l'ordre d'allumage, cette onde de surpression remonte vers la soupape d'échappement de ce cylindre i, par l'intermédiaire du point de jonction des flux des quatre cylindres. Cette onde de surpression arrive pendant la phase de croisement du cylindre i et refoule des gaz brûlés dans le cylindre, ce qui diminue le remplissage dudit cylindre et augmente la température du mélange carburé admis ce qui est préjudiciable aux performances du moteur.

Dans le cas d'un moteur à quatre cylindres, l'espace entre deux allumages étant de 180° V, on observe avec les longueurs des tubulures d'échappement couramment utilisées, une remontée de l'onde de surpression générée par le cylindre i + 1 dans la tubulure d'échappement du cylindre i, ce qui perturbe son remplissage.

Ce cas de figure correspond à une onde de surpression arrivant au niveau de la soupape d'échappement lors de la phase de croisement du cylindre i.

Dans le cas des collecteurs courts, le temps de parcours de l'onde de surpression dans le collecteur est toujours suffisamment court pour que l'onde perturbatrice arrive pendant le croisement des soupapes.

Pour éviter ce phénomène, la solution idéale consiste à placer le point de jonction des quatre cylindres le plus loin possible du moteur, ce qui implique d'éloigner aussi le pot catalytique.

Mais, compte tenu des contraintes de dépollution précédemment évoquées, cette disposition n'est pas envisageable.

L'invention a pour but d'éviter ces inconvénients en proposant un dispositif d'évacuation et de traitement des gaz d'échappement d'un moteur à combustion interne qui permet de satisfaire aux normes de dépollution imposées en améliorant les conditions de fonctionnement du pot catalytique lors du démarrage à froid du moteur et d'éviter que l'onde de surpression remonte vers ce moteur au cours de la phase de croisement des soupapes.

L'invention a donc pour objet un dispositif d'évacuation et de traitement des gaz d'échappement d'un moteur à combustion interne, du type comprenant une ligne principale d'échappement reliée par l'une de ses extrémités à la sortie des cylindres du moteur par des tubulures d'échappement et comportant un pot catalytique muni de canaux longitudinaux de circulation desdits gaz et au moins un pot de détente, caractérisé en ce que l'entrée du pot catalytique est raccordé directement aux tubulures d'échappement et la ligne d'échappement comporte des moyens de séparation des gaz d'échappement en deux flux indépendants de la sortie des tubulures d'échappement jusqu'à l'entrée du pot de détente.

Selon d'autres caractéristiques de l'invention :
- les moyens de séparation sont formés par un premier collecteur monté sur l'entrée du pot catalytique et comportant deux chambres indépendantes reliées chacune d'un côté à un groupe de tubulures d'échappement et de l'autre côté à un groupe de canaux du pot catalytique et par un second collecteur monté sur la sortie dudit pot catalytique et comportant deux chambres indépendantes reliées chacune d'un côté à un groupe de canaux du pot catalytique et de l'autre côté à une tubulure de liaison raccordée à l'entrée dudit pot de détente,
- chaque chambre du premier collecteur présente une conicité divergente vers l'entrée du pot catalytique,
- chaque chambre du second collecteur présente une conicité divergente vers la sortie du pot catalytique,
- chaque chambre du premier collecteur est reliée à la sortie de deux des cylindres qui ne se suivent pas dans l'ordre d'allumage,
- l'une des chambres du premier collecteur est reliée au premier et au quatrième cylindres et l'autre desdites chambres est reliée au second et au troisième cylindres,
- les tubulures d'échappement et le premier collecteur forment une seule pièce réalisée par fonderie.

Les caractéristiques et avantages de l'invention apparaîtront au cours de la description qui va suivre, donnée à titre d'exemple et faite en référence aux dessins annexés, sur lesquels :
- la Fig. 1 est une vue schématique d'un dispositif d'évacuation et de traitement des gaz d'échappement d'un moteur à combustion interne, conforme à l'invention,
- la Fig. 2 est une vue en perspective de l'élément de liaison entre le moteur et le pot catalytique conforme à l'invention,
- la Fig. 3 est une vue en perspective du collecteur d'entrée des gaz d'échappement dans le pot catalytique,
- la Fig. 4 est une vue en perspective du collecteur de sortie des gaz d'échappement du pot catalytique,
- la Fig. 5 est une vue en perspective de l'élément de liaison entre le collecteur de sortie du pot catalytique et le pot de détente.

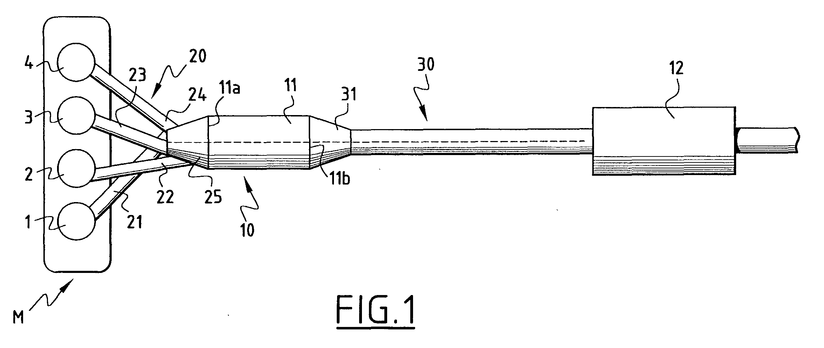

Sur la Fig. 1, on a représenté schématiquement un dispositif d'évacuation et de traitement des gaz d'échappement d'un moteur à combustion interne M comportant par exemple quatre cylindres en ligne, respectivement 1, 2, 3 et 4 dans l'ordre d'allumage.

Le dispositif d'évacuation et de traitement des gaz d'échappement comporte une ligne principale d'échappement-désignée dans son ensemble par la référence 10 et comprenant notamment un pot catalytique 11 et un premier pot de détente 12.

De manière classique, le pot catalytique 11 est constitué par une enveloppe métallique qui contient une structure imprégnée d'un matériau catalyseur déterminant des canaux longitudinaux de circulation pour les gaz d'échappement traversant le pot catalytique.

Les gaz d'échappement sont éliminés par une réaction chimique d'oxydation ou de réduction au contact du catalyseur, dès que celui-ci a été porté par ces gaz d'échappement à une température suffisante pour assurer le démarrage de la réaction chimique.

Le pot catalytique 11 est disposé à proximité des sorties des cylindres du moteur M et son entrée 11a est directement reliée auxdites sorties de ces cylindres par un élément de liaison désigné par la référence générale 20.

La sortie 11b du pot catalytique 11 est raccordée au pot de détente 12 par un élément intermédiaire de liaison désigné par la référence générale 30.

La sortie du pot de détente 12 est reliée au reste de la ligne d'échappement, non représentée.

D'une manière générale, la ligne d'échappement 10 comporte des moyens de séparation des gaz d'échappement en deux flux indépendants jusqu'à l'entrée du pot de détente 12.

L'élément de liaison 20 se compose d'un collecteur 25 dénommé par la suite premier collecteur et de quatre tubulures d'échappement, respectivement 21, 22, 23 et 24, raccordant chaque cylindre 1, 2, 3 et 4 avec le premier collecteur 25.

Sur les sorties des cylindres 1, 2, 3 et 4 est fixée, par exemple par l'intermédiaire d'organes de vissage non représentés, une bride 29 d'extrémité comportant quatre orifices correspondant respectivement aux sortie d'échappement de la culasse du moteur M.

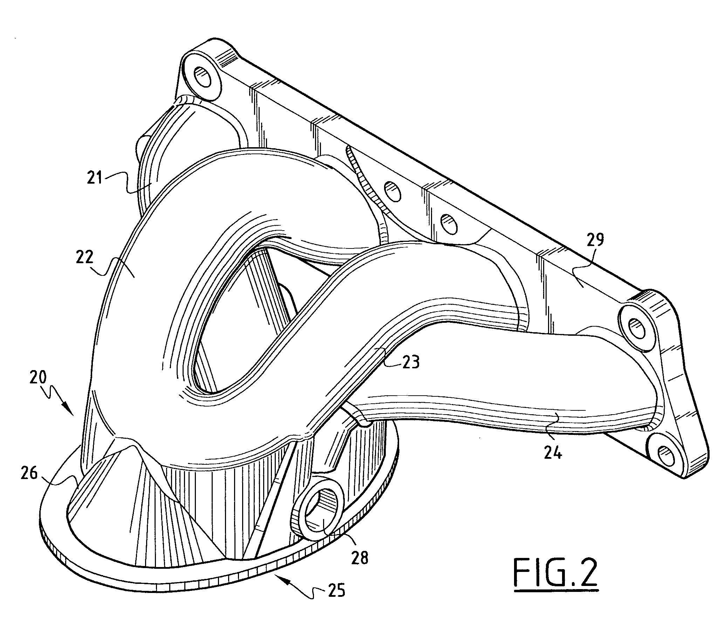

Ces orifices ménagés sur la bride 29 d'extrémité sont reliés au premier collecteur 25 par les tubulures d'échappement 21, 22, 23 et 24, comme représenté à la Fig. 2.

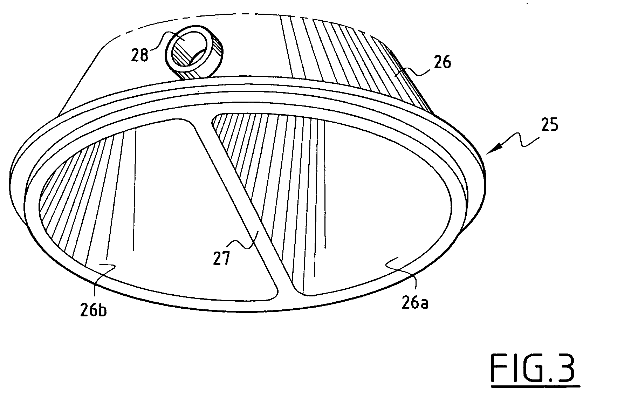

Ainsi que représenté à la Fig. 3, le premier collecteur 25 monté sur l'entrée 11a du pot catalytique 11 comporte une enveloppe 26 délimitant intérieurement deux chambres, respectivement 26a et 26b, qui présentent chacune une conicité divergente vers l'entrée 11a du pot catalytique 11.

La chambre 26a est reliée à un premier groupe de tubulures d'échappement 21 et 24 qui sont raccordées chacune à une sortie d'échappement d'un cylindre, respectivement 1 et 4, et la chambre 26b est reliée à un second groupe de tubulures d'échappement 22 et 23 qui sont raccordées chacune à une sortie d'échappement d'un cylindre, respectivement 2 et 3.

Ainsi, les gaz d'échappement provenant des chambres de combustion des cylindres sont séparés en deux flux indépendants, un premier flux provenant des chambres de combustion des cylindres 1 et 4 convergent vers la chambre de combustion 26a et un second flux provenant des chambres de combustion des cylindres 2 et 3 et convergent vers la chambre 26b du premier collecteur 25, dans le cas où l'ordre d'allumage des cylindres est 1-3-4-2.

En fait, chaque chambre, respectivement 26a et 26b, du premier collecteur 25 est reliée à la sortie de deux des cylindres qui ne se suivent pas dans l'ordre d'allumage.

Comme représenté à la Fig. 3, les chambres 26a et 26b sont séparées par une cloison transversale 27 qui s'étend sur toute la hauteur de l'enveloppe 26.

De préférence, les tubulures d'échappement 21, 22, 23 et 24 et le premier collecteur 25 forment une seule pièce réalisée par exemple par fonderie.

L'enveloppe 26 du premier collecteur 25 comporte un orifice 28 pour l'implantation dans la cloison transversale 27 d'une sonde à oxygène, non représentée.

Dans le cas où une sonde à oxygène est implantée dans chaque chambre 26a et 26b, l'enveloppe 26 est percée de deux orifices débouchant chacun dans une desdites chambres.

L'ensemble constitué par le premier collecteur 25 et les tubulures d'échappement 21, 22, 23 et 24 est fixé sur l'entrée 11a du pot catalytique 11 par des moyens appropriés, non représentés.

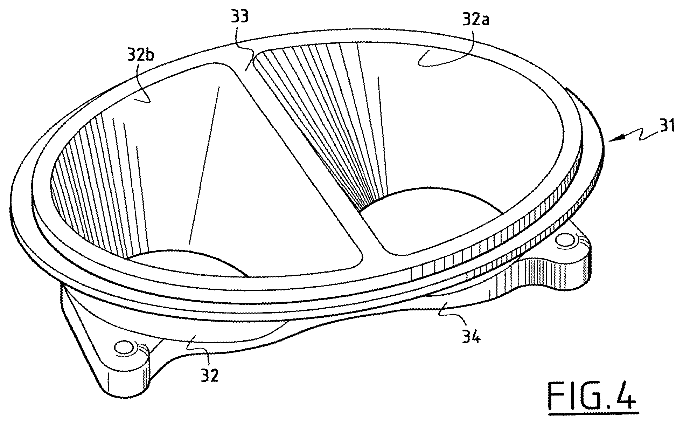

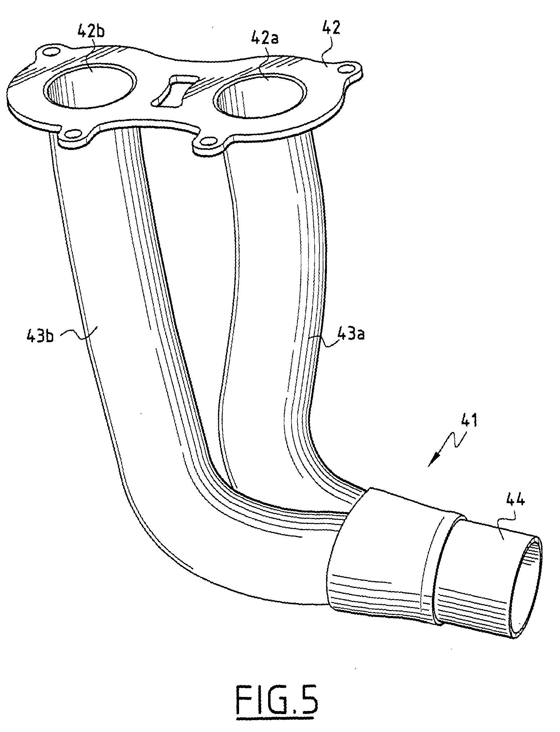

L'ensemble de liaison 30 entre la sortie 11b du pot catalytique 11 et l'entrée du pot de détente 12 comporte deux sous ensembles formés respectivement par un collecteur 31 fixé sur la sortie 11b du pot catalytique 11 et dénommé par la suite second collecteur (Fig. 4) et par des tubulures de liaison 41 disposées entre le second collecteur 31 et l'entrée du pot catalytique 12 (Fig. 5).

Le second collecteur 31 représenté à la Fig. 4 comporte une enveloppe 32 délimitant intérieurement deux chambres, respectivement 32a et 32b, séparées l'une de l'autre par une cloison transversale 33 s'étendant sur toute la hauteur de l'enveloppe 32.

Ce second collecteur 31 est fixé sur la sortie 11b du pot catalytique 11 par des moyens appropriés, non représentés, et comporte à son extrémité opposée une bride 34 de raccordement par des organes de vissage, non représentés, avec les tubulures de liaison 41.

Chaque chambre 32a et 32b du second collecteur 31 présente une conicité divergente vers la sortie 11b du pot catalytique 11.

La bride 34 du second collecteur 31 est raccordée à l'élément 41 par une bride 42 comportant deux orifices 42a et 42b reliés respectivement à la chambre 32a et 32b dudit second collecteur 31.

L'élément 41 est formé par une première partie comprenant deux tubulures 43a et 43b s'étendant sur une partie de la longueur dudit élément 41 et une seconde partie formée par une tubulure unique 44 s'étendant sur l'autre partie dudit élément 41.

La tubulure 43a est reliée par l'une de ses extrémités à la chambre 32a du second collecteur 31 et par l'autre de ses extrémités à la tubulure 44 et la tubulure 43b est reliée par l'une de ses extrémités à la chambre 32b dudit second collecteur 31 et par l'autre de ses extrémités à cette tubulure 44 qui est elle-même raccordée à l'entrée du pot de détente 12 par des moyens appropriés, non représentés.

Grâce au dispositif d'évacuation et de traitement selon l'invention, le pot catalytique 11 est placé à proximité du moteur et est relié directement aux sorties des cylindres de ce moteur ce qui permet d'amener rapidement le catalyseur du pot catalytique à une température suffisante pour assurer le démarrage de la réaction chimique.

De plus, le dispositif d'évacuation et de traitement selon l'invention permet de garder la séparation des tubulures d'échappement de façon que l'onde de surpression néfaste ne puisse remonter vers le moteur qu'après un trajet suffisamment long pour la faire arriver après la phase de croisement des soupapes dudit moteur.

En effet, les gaz d'échappement sont séparés en deux flux indépendants.

Un premier flux provenant des cylindres 1 et 4 est canalisé vers la chambre 26a du premier collecteur 25 par les tubulures d'échappement 21 et 24, puis passe par un premier groupe de canaux du pot catalytique 11 et à la sortie de ce pot catalytique 11, le premier flux de gaz d'échappement est canalisé vers le pot de détente 12 par la chambre 32a du second collecteur 31 et la tubulure 43a.

Le second flux de gaz d'échappement provenant des cylindres 2 et 3 est canalisé dans la chambre 26b du premier collecteur 25 par les tubulures d'échappement 22 et 23, puis traverse un second groupe de canaux du pot catalytique 11. A la sortie de ce pot catalytique 11, le second flux de gaz d'échappement traverse la chambre 32b du second collecteur 31 et la tubulure 43b.

Les deux flux sont ensuite regroupés en un seul flux qui est canalisé vers le pot de détente 12 par l'intermédiaire de la tubulure 44.

La conception du dispositif d'évacuation et de traitement des gaz d'échappement selon l'invention présente l'avantage de permettre une implantation du pot catalytique à proximité du moteur et donc d'obtenir une montée en température rapide du catalyseur de ce pot catalytique et également d'éviter une remontée néfaste vers le moteur de l'onde de surpression pendant la phase de croisement des soupapes de ce moteur.

## Revendications

1. Dispositif d'évacuation et de traitement des gaz d'échappement d'un moteur à combustion interne, du type comprenant une ligne principale d'échappement (10) reliée par l'une de ses extrémités à la sortie des cylindres (1, 2, 3, 4) du moteur par des tubulures d'échappement (21, 22, 23, 24) et comportant un pot catalytique (11) muni de canaux longitudinaux de circulation desdits gaz et au moins un pot de détente (12), caractérisé en ce que l'entrée (11a) du pot catalytique (11) est raccordée directement aux tubulures d'échappement (21, 22, 23, 24) et la ligne d'échappement (10) comporte des moyens (25 ; 31 ; 43a, 43b) de séparation des gaz d'échappement en deux flux indépendants de la sortie des tubulures d'échappement (21, 22, 23, 24) jusqu'à l'entrée du pot de détente (12).

2. Dispositif selon la revendication 1, caractérisé en ce que les moyens de séparation sont formés par un premier collecteur (25) monté sur l'entrée (11a) du pot catalytique (11) et comportant deux chambres indépendantes (26a, 26b) reliées chacune d'un côté à un groupe de tubulures d'échappement (21, 24) et de l'autre côté à un groupe de canaux du pot catalytique (11) et par un second collecteur (31) monté sur la sortie (11b) dudit pot catalytique (11) et comportant deux chambres indépendantes (32a, 32b) reliées chacune d'un côté à un groupe de canaux du pot catalytique (11) et de l'autre côté à une tubulure de liaison (43a, 43b) raccordée à l'entrée dudit pot de détente (12).

3. Dispositif selon la revendication 2, caractérisé en ce que chaque chambre (26a, 26b) du premier collecteur (25) présente une conicité divergente vers l'entrée (11a) du pot catalytique (11).

4. Dispositif selon la revendication 2, caractérisé en ce que chaque chambre (32a, 32b) du second collecteur (31) présente une conicité divergente vers la sortie (11b) du pot catalytique (11).

5. Dispositif selon l'une quelconque des revendications 2 à 4, caractérisé en ce que chaque chambre (26a, 26b) du premier collecteur (25) est reliée à la sortie de deux des cylindres (1, 2, 3, 4) qui ne se suivent pas dans l'ordre d'allumage.

6. Dispositif selon la revendication 5, caractérisé en ce que la chambre (26a) du premier collecteur (25) est reliée aux cylindres (1, 4) et la chambre (26b) dudit premier collecteur (25) est relié aux cylindres (2, 3).

7. Dispositif selon l'une quelconque des revendications précédentes, caractérisé en ce que les tubulures d'échappement (21, 22, 23, 24) et le premier collecteur (25) forment une seule pièce réalisée par fonderie.
